# EUROPÄISCHE PATENTSCHRIFT

(11) **EP 3 580 533 B1**
(45) Veröffentlichungstag und Bekanntmachung des Hinweises auf die Patenterteilung: **27.07.2022**
(21) Anmeldenummer: 18700418.9
(22) Anmeldetag: 15.01.2018
(51) Int. Cl.: G01F 23/296, G08C 19/02

(54) **FELDGERÄT ZUR BESTIMMUNG EINES GRENZWERTES**
FIELD DEVICE FOR DETERMINING A LIMIT VALUE
APPAREIL DE TERRAIN PERMETTANT DE DÉTERMINER UNE VALEUR LIMITE

(30) Priorität: 10.02.2017 DE 102017102678
(43) Veröffentlichungstag der Anmeldung: 18.12.2019
(73) Patentinhaber: Endress+Hauser SE+Co. KG, 79689 Maulburg (DE)
(72) Erfinder: MEIER, Jürgen, 79689 Maulburg (DE); SCHLEITH, Christoph, 79650 Schopfheim (DE); MONSE, Benjamin, 79235 Vogtsburg (DE)
(74) Vertreter: Andres, Angelika Maria
(86) Internationale Anmeldenummer: PCT/EP2018/050831
(87) Internationale Veröffentlichungsnummer: WO 2018/145859

(56) Entgegenhaltungen:
- WO-A1-2013/097989
- US-A1- 2008 007 307
- US-A1- 2014 347 033
- US-B1- 6 429 786

## Beschreibung

In der Automatisierungstechnik, insbesondere in der Prozessautomatisie-rungstechnik, werden vielfach Feldgeräte eingesetzt, die zur Erfassung und/oder zur Beeinflussung von Prozessgrößen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten,

Leitfähigkeitsmessgeräten, usw. zum Einsatz kommen. Sie erfassen die entsprechenden Prozessgrößen wie Füllstand, Durchfluss, Druck, Temperatur, pH-Wert, Redoxpotential oder Leitfähigkeit. Zur Beeinflussung von Prozessgrößen dienen Aktoren, wie unter Anderem Ventile oder Pumpen, über die der Durchfluss einer Flüssigkeit in einem Rohrleitungsabschnitt bzw. der Füllstand in einem Behälter geändert werden kann. Eine Vielzahl solcher Feldgeräte wird von der Firma Endress + Hauser hergestellt und vertrieben.

Bei Feldgeräten ist die Detektion eines Grenzwertes der oben genannten physikalischen oder chemischen Prozessgrößen eine häufig benötigte Funktion. Dabei kann es sich beispielsweise um die Detektion eines Grenzstandes, also die Detektion eines maximal oder minimal erlaubten Füllstandes eines Füllgutes in einem Behälter handeln. Dies kann aber auch eine maximal erlaubte Durchflussgeschwindigkeit eines Mediums in einem Rohr, die maximal (oder minimal) erlaubte Konzentration eines Stoffes in einem Füllgut oder ein maximal bzw. minimal erlaubter Druck in einem Behältnis sein.

Die Detektion des jeweiligen Grenzwertes kann je nach Art der Prozessgröße prinzipiell auf Basis verschiedener Messprinzipen erfolgen. Im Fall von Grenzstanddetektion kann als Messprinzip einerseits beispielsweise ein Radar-basiertes Messverfahren, beispielsweise nach dem Puls-Laufzeit- oder dem FMCW- ("Frequency Modulated Continuos Wave") Prinzip eingesetzt werden. Hierbei wird der aktuelle Füllstand gemessen und mit einem hinterlegten Grenzstandwert verglichen. Der prinzipielle Aufbau eines nach dem Puls-Laufzeit Verfahren arbeitenden Füllstands-Messgerätes wird beispielsweise in der Veröffentlichungsschrift DE10 2011 089 152 A1 erläutert.

Ein technisch sehr simples Messprinzip zur Bestimmung des Grenzstandes stellt das vibronische Messprinzip dar. Den Kern entsprechender Feldgeräte bilden Sensoren, die mindestens einen Schwingstab umfassen. Dessen Resonanzfrequenz ändert sich bei Kontakt mit dem Füllgut. Entsprechend dem Funktionsprinzip einer Stimmgabel werden beim vibronischen Messprinzip jedoch üblicherweise zwei entsprechend gekoppelte Schwingstäbe eingesetzt. Neben der einfachen technischen Realisierung besteht ein weiterer Vorteil des vibronischen Messprinzips darin, dass es nicht nur bei flüssigen Füllgütern, sondern auch bei Granulat-artigen Feststoffen, wie Kies, Getreide etc. eingesetzt werden kann.

Das vibronische Messprinzip basiert auf der Überwachung der Resonanzfrequenz des Schwingstabes bzw. des schwingfähigen Systems. Hierbei wird eine Änderung der Resonanzfrequenz je nach Änderungsrichtung (also Erhöhung oder Verringerung der Resonanzfrequenz) entweder als Über- oder als Unterschreiten des Grenzstandes interpretiert. Ein solcher Sensor ist beispielsweise in der Patentschrift US 5,815,079 gezeigt. Um eine aussagekräftige Grenzstanddetektion auf Basis des vibronischen Messprinzips durchführen zu können, ist es zudem notwendig, den vibronischen Sensor auf der entsprechenden Höhe des Grenzstandes im Behälter-Inneren (in der Regel an der Innenwand des Behälters) zu Ein anderes Beispiel eines vibronischen Feldgerätes ist in der Druckschrift WO 2013/97989 A1 zu finden.

Im Fall eines zu überwachenden, maximal erlaubten Füllstandes, beispielsweise auf Höhe eines Überlaufventils, ist ein vibronischer Grenzstandsensor entsprechend in etwa auf dieser maximalen Höhe (beziehungsweise im optimalen Fall leicht darunter) angeordnet. Da der Grenzstandsensor üblicherweise mit einer übergeordneten Einheit wie einer Prozessleitstelle verbunden ist, kann bei Detektion des maximalen Füllstandes durch die übergeordnete Einheit beispielsweise ein Abpumpen des Füllgutes oder ein Öffnen des Überlaufventils, oder schlichtweg eine Warnmeldung veranlasst werden. Neben der Detektion des maximalen Füllstandes besteht eine alternative Anwendung von Grenzstandsensoren in der Detektion eines minimalen Füllstandes. In diesen Fällen wird ein Unterschreiten des minimalen Füllstands als Erreichen des Grenzstandes interpretiert. Anwendung findet dies zum Beispiel, um durch die übergeordnete Einheit ein Wiederbefüllen zu veranlassen und so beispielsweise chemische Prozesse innerhalb des Behälters aufrecht zu halten.

Allgemein erfolgt die Kommunikation zwischen dem Feldgerät, das den Grenzwert detektiert, und der übergeordneten Einheit über eine Zweidraht-Leitung mittels eines entsprechenden Protokolls. Aufgrund ihrer Einfachheit und Übertragungssicherheit ist hier als Protokoll standardmäßig die am 12/01/2000 veröffentlichte Norm DIN EN 60947-5-6 gemäß "NAMUR" (Normenarbeitsgemeinschaft für Mess- und Regeltechnik in der Chemischen Industrie") implementiert. Gemäß diesem Protokoll ist die Information, ob der Grenzwert erreicht ist, als Stromstärke eines Gleichstrom-Sensorsignals implementiert. Dies bedeutet, dass das Sensorsignal mit der entsprechenden Stromstärke in einer Stromschleife über die Zweidraht-Leitung zur übergeordneten Einheit fließt. Hierbei repräsentiert eine Stromstärke des Sensorsignals im Bereich von ca. 0,4 mA bis 1 mA (bei einem Spannungsabfall über die Zweidrahtleitung von ca. 6.5 V bis 9 V) einen nicht erreichten Grenzwert. Eine Stromstärke des Sensorsignals im Bereich von ca. 2,2 mA bis 9,5 mA (bei einem Spanungsabfall von ca. 2 V bis 8 V) entspricht einem erreichten Grenzwert. Diese Art der Protokollierung hat den Vorteil, dass eine Stromstärke unterhalb von 0,2 mA als Kabelbruch und somit als Fehlerzustand innerhalb der Zweidraht-Leitung interpretiert wird. Eine deutlich höhere Stromstärke als 10 mA weist hingegen auf einen Kurzschluss (entweder in der Zweidraht-Leitung oder in dem Feldgerät) und somit ebenfalls auf einen Fehlerzustand hin. Ein weiterer Vorteil dieses Protokolls liegt darin, dass mittels des Sensorsignals gleichzeitig die elektrische Energieversorgung des Feldgerätes erfolgen kann.

Nicht nur im Fall des NAMUR-Protokolls ist die Wahl der allgemein geringen Stromstärken des Sensorsignals im Bereich von lediglich einigen mA auf den potentiell sehr explosionsgefährdeten Einsatzort der Grenzstand-detektierenden Feldgeräte zurückzuführen (beispielsweise in Behältern mit hochexplosiven Chemikalien). Durch die generell niedrigen Ströme (und somit die niedrige übertragende Leistung) des Sensorsignals können die Feldgeräte entsprechende Vorschriften zum Explosionsschutz sicher einhalten (gültig ist in diesem Kontext die Normenreihe DIN EN 60079). Problematisch an derart niedrigen Strömen des Sensorsignals ist jedoch, dass bereits bei einer geringen systematischen Abweichung der Stromstärke des Sensorsignals vom Sollwert die Information über das etwaige Vorliegen des Grenzstandes nicht mehr zuverlässig weitergegeben wird. Solch eine systematische Abweichung der Stromstärke kann sich beispielsweise einstellen, wenn sich durch staubhaltige Atmosphäre im Behälter mit steigender Betriebszeit des Feldgerätes Ablagerungen in dessen Elektronik bilden, die zu verringerten Impedanzen innerhalb der Elektronik führen können. Als Konsequenz solch einer unzuverlässigen Signalübertragung können je nach Einsatzgebiet ernsthafte Gefahrenzustände innerhalb der Prozessanlage auftreten, beispielsweise wenn einer Prozessleitstelle das Überschreiten eines maximalen Füllstandes nicht gemeldet wird.

Der Erfindung liegt daher die Aufgabe zugrunde, ein Feldgerät zur Bestimmung eines Grenzwertes einer physikalischen oder chemischen Prozessgröße bereitzustellen, mit dem eine zuverlässige Signalübertragung gewährleistet ist.

Die Erfindung löst diese Aufgabe durch ein Feldgerät zur Bestimmung eines Grenzwertes einer physikalischen oder chemischen Prozessgröße, wie in dem Anspruch 1 definiert wird.

Hierbei ist die steuerbare Stromquelle gemäß der Erfindung so ausgestaltet, um das Sensorsignal am Signaleingang in Abhängigkeit eines von der Sensoreinheit ausgegebenen Steuersignals zu steuern. Dazu kann die Stromquelle insbesondere dann technisch vergleichsweise leicht realisiert werden, da die Sensoreinheit erfindungsgemäß derart ausgelegt ist, dass das Schaltsignal als digitaler Wert, der abhängig vom Erreichen des Grenzwertes ist, ausgegeben wird.

Durch diese erfindungsgemäße Anordnung des Widerstandselements zwischen der steuerbaren Stromquelle und der eigentlichen Sensoreinheit wird erreicht, dass auch bei Vorhandensein einer Impedanz Rₛₕᵤₙₜ, die sich mit steigender Betriebszeit des Feldgerätes in der Sensoreinheit bildet bzw. stetig verringert, der Signalwert zur übergeordneten Einheit dennoch nicht verfälscht wird. Das Feldgerät wird somit übertragungssicher. Dabei ist es nach wie vor möglich, das Feldgerät explosionssicher auszulegen, da der Signalwert auch bei geringen Stromstärken (beispielsweise entsprechend dem NAMUR Protokoll) übertragungssicher bleibt. Folglich wird eine vorteilhafte Ausgestaltungsvariante des erfindungsgemäßen Feldgerätes dadurch gebildet, dass die Schnittstelle ausgelegt ist, um das Sensorsignal (s_{I}) entsprechend dem NAMUR-Standard, insbesondere gemäß der Norm DIN EN 60947-5-6), zu übertragen.

Das erfindungsgemäße Feldgerät kann prinzipiell zur Detektion der Grenzwerte aller eingangs erwähnten Prozessgrößen, also beispielsweise des Druckes, des Grenzstandes, der Konzentration etc. eingesetzt werden. Hierzu ist das Funktionsprinzip der Sensoreinheit für die entsprechende Anwendung jeweils geeignet auszulegen, beispielsweise als Druck-, kapazitiver- oder induktiver Sensor. Wenn es sich bei dem Grenzwert um einen Grenzstand eines in einem Behälter befindlichen Füllgutes handelt, ist es besonders vorteilhaft, wenn die Sensoreinheit einen nach dem vibronischen Messprinzip arbeitenden Sensor umfasst.

Im Sinne der Erfindung ist es nicht fest vorgegeben, wie das Widerstandselement realisiert zu sein hat. Eine erste Möglichkeit besteht darin, das Widerstandselement als regelbaren Widerstand auszulegen. In diesem Fall bietet es sich insbesondere an, dass ein solch regelbarer Widerstand in Abhängigkeit der an der Sensoreinheit anliegenden Spannung geregelt ist. Dies bietet die Möglichkeit, neben der einzustellenden Stromstärke des Sensorsignals auch den Spannungsbereich des Sensorsignals nach den Vorgaben des jeweils verwendeten Protokolls, also beispielsweise NAMUR, einzustellen.

Eine alternative Möglichkeit zur Auslegung des Widerstandselementes besteht darin, das Widerstandselement als Zener-Diode, die insbesondere in Sperrrichtung angeordnet ist, zu realisieren. Neben einer Ausführung als monolithisches Bauteil kann die Ausführung der Zener-Diode beispielsweise auch in Form eines FET-Transistors erfolgen, dessen Gate durch einen eingangsseitig entsprechend verschalteten Verstärker gesteuert wird.

Daneben kann im Rahmen der Erfindung auch die Stromquelle auf verschiedene Arten realisiert werden. In einer vorteilhaften Ausgestaltungsvariante umfasst die steuerbare Stromquelle zumindest folgende Komponenten:
- Einen bipolaren- oder MOSEFET-Transistor, dessen Kollektor- bzw. Source-Anschluss und dessen Emitter- bzw. Drain-Anschluss entweder im ersten Signalpfad oder im zweiten Signalpfad angeordnet sind, und
- einen Verstärker, dessen Ausgang den Gate- bzw. Basis-Anschluss des Transistors ansteuert, wobei die zumindest zwei Eingänge des Verstärkers derart verschaltet sind, dass die Stromquelle den Wert des Sensorsignals gemäß einer Regelungsfunktion, insbesondere einer I, PI- oder PID-Regelungsfunktion, regelt.

Hierbei besteht eine Möglichkeit zur Regelung des Stromsignals gemäß der vordefinierten Regelungsfunktion darin, dass die zumindest zwei Eingänge des Verstärkers wie folgt verschaltet sind:
- ein erster Eingang des Verstärkers ist an den zweiten Signalpfad angeschlossen, wobei dieser Anschluss ein Massepotential der Schnittstelle bildet,
- ein zweiter Eingang des Verstärkers ist derart über einen ersten Teilwiderstand eines Spannungsteilers an eine Referenzspannungsquelle angeschlossen, dass sich das Potential am zweiten Eingang des Verstärkers aus dem Teilerverhältnis des Spannungsteilers in Bezug zu der Referenzspannungsquelle ergibt, wobei der zweite Teilwiderstand des Spannungsteilers mit dem zweiten Signalpfad verbunden ist, und
- im zweiten Signalpfad ist zwischen dem Massepotential und dem zweiten Teilwiderstand ein Regelwiderstand angeordnet.

Auch die Ausgestaltung des Spannungsteilers ist erfindungsgemäß nicht fest vorgegeben. Eine bevorzugte Variante sieht vor, dass der Spannungsteiler derart ausgestaltet ist, dass das Teilerverhältnis des Spannungsteilers mittels eines Schaltelements zwischen zumindest zwei verschiedenen Werten umschaltbar ist. Dabei wird das Schaltelement durch das Steuersignal der Sensoreinheit gesteuert. Alternativ ist es aber auch denkbar, dass der Spannungsteiler als Potentiometer ausgestaltet ist, welches durch das Steuersignal der Sensoreinheit auf zumindest zwei unterschiedliche Teilerverhältnisse einstellbar ist.

Anhand der nachfolgenden Figuren wird die erfindungsgemäße Schnittstelle für Feldgeräte zur Grenzwertdetektion näher erläutert. Es zeigt:
Fig. 1: eine schematische Darstellung eines vibronischen Grenzstandsensors,
Fig. 2: eine schematische Darstellung der erfindungsgemäßen Schnittstelle für Grenzwertsensoren, und
Fig. 3: eine mögliche Ausgestaltungsform der erfindungsgemäßen Schnittstelle.

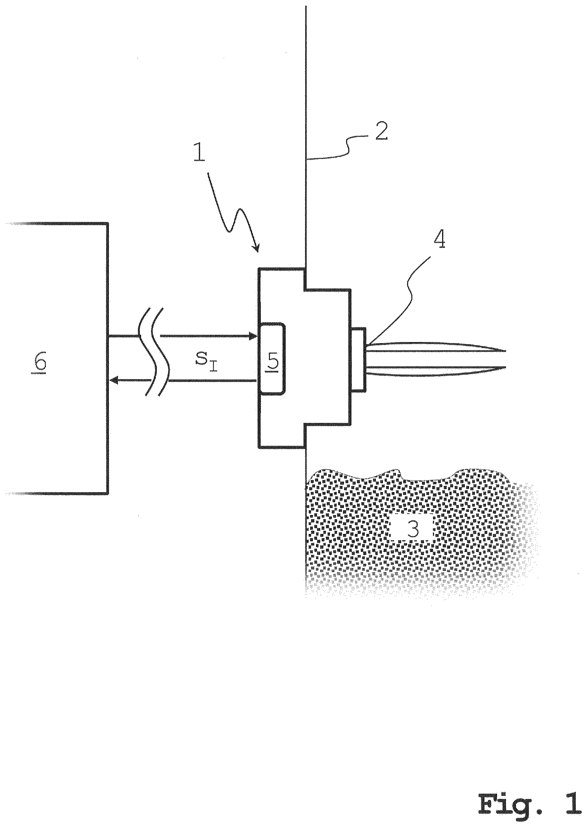

Zum Verständnis der Erfindung ist es erforderlich, die allgemeine Funktionsweise von Feldgeräten, die zur Grenzwertdetektion eingesetzt werden, zu veranschaulichen. Daher ist in Fig. 1 ein nach dem vibronischen Messprinzip arbeitendes Feldgerät 1 dargestellt. Im gezeigten Ausführungsbeispiel dient das Feldgerät 1 zur Grenzstanddetektion eines in einem Behälter 2 befindlichen Füllgutes 3. Hierzu umfasst das Feldgerät 1 eine Sensoreinheit 4 mit zwei Schwingstäben (gemäß dem Prinzip einer Stimmgabel). Dabei ist das Feldgerät 1 derart an einer Öffnung in der Wand des Behälters 2 angeordnet, dass die zwei Schwingstäbe ins Innere des Behälters 2 gerichtet sind.

Über eine Zweidraht-basierte Schnittstelle 5 des Feldgerätes 1 ist das Feldgerät 1 mit einer übergeordneten Einheit 6 verbunden, wobei sich die Schnittstelle 5 im gezeigten Ausführungsbeispiels in einem außerhalb des Behälters 2 befindlichen Gehäuseteil des Feldgerätes 1 befindet. Über die Schnittstelle 5 wird ein strombasiertes Sensorsignal s_{I} vom Feldgerät 1 zur übergeordneten Einheit 6 übertragen. Dabei beinhaltet das Sensorsignal s_{I} diejenige Information, ob das Füllgut 3 den Grenzstand aktuell erreicht hat.

Ob der Grenzstand als "Erreicht" oder "Nicht-Erreicht" detektiert wird (also unter- bzw. überschritten) ist, hängt von der Auslegung des Feldgerätes 1 ab: Gemäß der zwei potentiell möglichen Alternativen kann es dazu ausgelegt sein, entweder einen maximalen Grenzstand oder einen minimalen Grenzstand zu detektieren.

Bei der in Fig. 1 gezeigten Ausführungsvariante sind potentiell beide Auslegungen möglich: Da sich das Füllgut 3 unterhalb der zwei Schwingstäbe der Sensoreinheit 4 befindet, entspricht der in Fig. 1 dargestellte Zustand für den Fall, dass ein maximaler Grenzstand zu detektieren ist, einem "nicht erreichten" Grenzstand. Im anderen Fall, in dem ein minimaler Grenzstand zu detektieren ist, entspricht diese Darstellung somit dem Zustand, dass der Grenzstand momentan "erreicht" bzw. unterschritten ist.

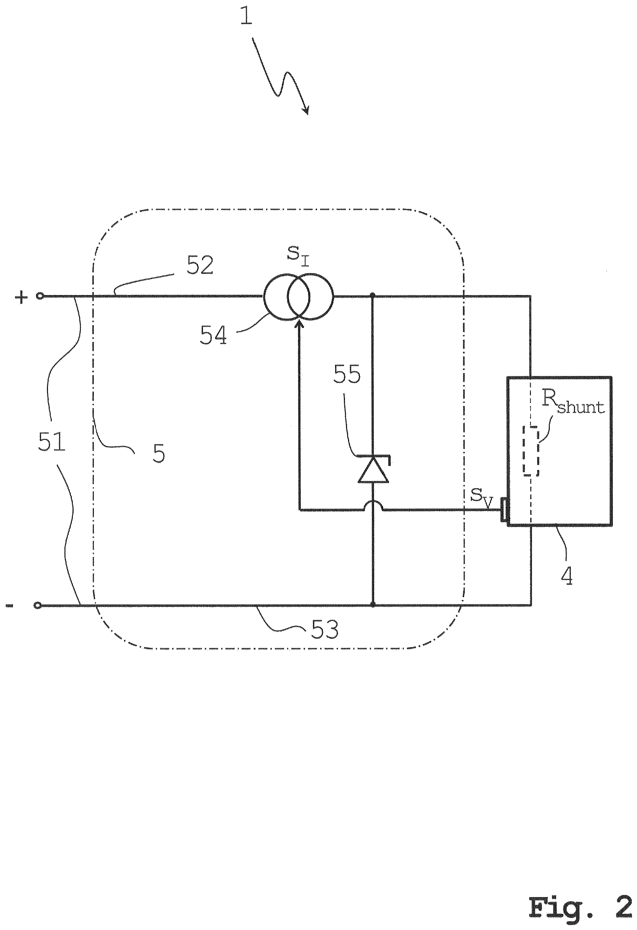

Eine erfindungsgemäße Schnittstelle 5 eines Feldgerätes 1, mittels der die Information über das Erreichen des Grenzstandes zuverlässig von der Sensoreinheit 4 übertragen werden kann, ist in Fig. 2 dargestellt: Hierzu umfasst die Schnittstelle 5 einen Signaleingang 51 zur übergeordneten Einheit 6. Über den Signaleingang 51 erfolgt die elektrische Kontaktierung der Sensoreinheit 4 innerhalb der Schnittstelle 5 entlang eines ersten Signalpfades 52 und eines zweiten Signalpfades 53.

Die Sensoreinheit 4 liefert die Information, ob der Grenzstand erreicht ist, mittels eines digitalen, spannungsbasierten Steuersignals s_{V}. Je nach Auslegung der Sensoreinheit 4 kann der Zustand "Grenzstand nicht erreicht" beispielsweise durch einen niedrigen Spannungs-Wert bzw. Bereich zwischen 0 V und 1 V repräsentiert werden; Der Zustand "Grenzwert erreicht" kann entsprechend durch einen höheren Spannungs-Wert oder Bereich, beispielsweise zwischen 3 V und 5 V definiert werden. Auch eine umgekehrte Definition der beiden zustände wäre denkbar.

Welche Definition, bzw. welche zwei exakten Spannungsbereiche für die zwei Zustände zu wählen sind, hängt davon ab, wie genau durch das Steuersignal s_{V} die Stromstärke des Sensorsignals si am Signaleingang 51 eingeprägt wird: Hierzu ist im ersten Signalpad 52 eine steuerbare Stromquelle 54 vorgesehen, die in Abhängigkeit des Steuersignals sv entsprechend des NAMUR-Protokolls einen niedrigen- oder hohen Stromwert des Sensorsignals s_{I} (und somit die Information über das etwaige Erreichen des Grenzstandes) am Signaleingang 51 einstellt. Erfindungsgemäß wäre es natürlich auch denkbar, die Stromquelle 54 entsprechend im zweiten Signalpfad 53 anzuordnen.

Erfindungsgemäß ist (in Bezug zum Signaleingang 51) hinter der Stromquelle 54 parallel zur Sensoreinheit 4 ein Widerstand 55 zwischen dem ersten Signalpfad 52 und dem zweiten Signalpfad 53 angeordnet. Im gezeigten Ausführungsbeispiel ist dieser als Zener-Diode 55, die in Sperrrichtung angeordnet ist, realisiert. Somit bewirkt die erfindungsgemäße Anordnung, dass die von der Stromquelle 54 eingestellte Stromstärke des Signalwertes s_{I} unabhängig davon ist, ob sich in der Sensoreinheit 4 mit steigender Betriebszeit eine etwaige Impedanz Rₛₕᵤₙₜ, beispielsweise aufgrund von Schmutz-Ablagerungen aus dem Behälter 2, bildet (abgesehen vom Versorgungsstrom im Bereich von ca. 300 µA findet in der der Sensoreinheit 4 idealer Weise kein Stromfluss statt). Denn aufgrund der Parallelanordnung des Widerstandes 55 zwischen Stromquelle 54 und Sensoreinheit 4 entspricht der Stromfluss am Signaleingang 51 zwangsweise immer dem von der Stromquelle 54 eingestellten Wert. Dadurch wird auch die Information über das etwaige Erreichen des Grenzstandes zuverlässig weitergegeben.

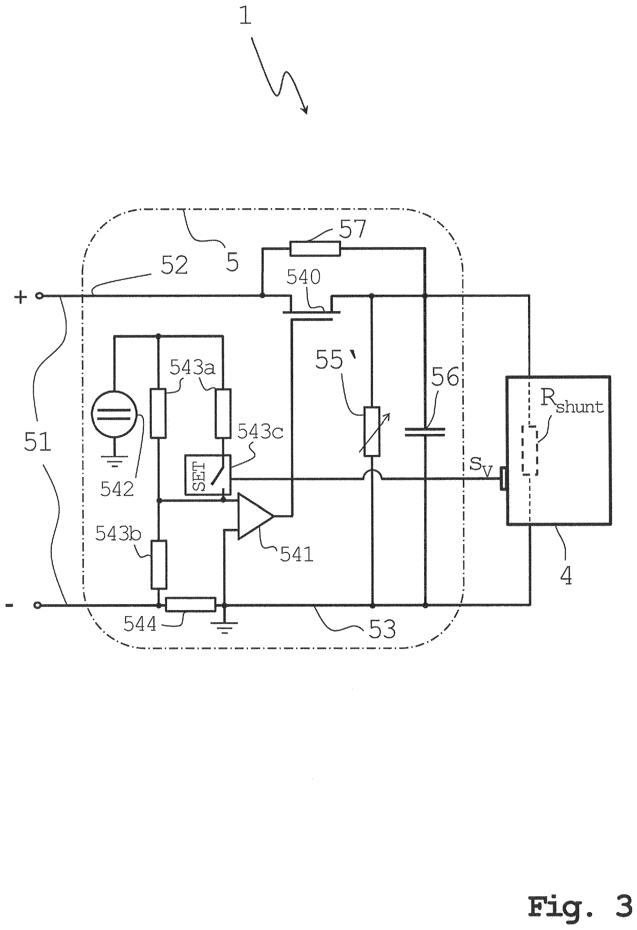

In Fig. 3 ist eine mögliche Ausgestaltungsvariante der Stromquelle 54 gezeigt: Kern der dort gezeigten Stromquelle 54 ist ein PNP-Transistor. Dieser ist so angeordnet, dass der erste Signalpfad (52) über den Source- und Drain-Anschluss des Transistors 540 verläuft. Das Gate des Transistors 540 wird durch den Ausgang eines Verstärkers 541 angesteuert.

Der Verstärker 541 ist eingangsseitig so verschaltet, dass der erste Eingang des Verstärkers 541 direkt an den zweiten Signalpfad 53 angeschlossen ist. Dieser Anschluss bildet das Massepotential der Schnittstelle 5 bzw. des Feldgerätes 1. Der zweite Eingang des Verstärkers 541 ist am Mittelabgriff eines Spannungsteilers 543a,b,c angeschlossen. Dabei wird das Potential am Mittelabgriff durch eine Referenzspannungsquelle 542, deren Spannung der Spannungsteiler teilt, und dem Teilerverhältnis des Spannungsteilers 543a,b,c (entsprechend dem Widerstandsverhältnis der zwei Teilwiderstände 543a, 543b des Spannungsteilers 543a,b,c) eingestellt.

Dabei ist der erste, obere Teilwiderstand 543a an die Referenzspannungsquelle 542 angeschlossen. Der untere, zweite Teilwiderstand 543b des Spannungsteilers 543a,b,c ist, wie auch der erste Eingang des Verstärkers 541, an den zweiten Signalpfad 53 angeschlossen. Allerdings ist zwischen diesem Anschluss und dem Anschluss des ersten Eingangs im zweiten Signalpfad 53 (also dem Massepotential der Schnittstelle 5) ein (niederohmiger) Regelwiderstand 544 verschaltet.

Wie aus Fig. 3 ersichtlich wird, ist der obere, zweite Teilwiderstand 543a des Spannungsteilers 543a,b,c, der zwischen dem zweiten Eingang des Verstärkers 541 und der Referenzspannungsquelle 542 angeordnet ist, in Form zweier Parallelwiderstände 543a realisiert. Davon kann einer der beiden Parallelwiderstände 543a durch einen Schalter 543c zugeschaltet werden. Der Schalter 543c wird wiederum durch das Steuersignal sv der Sensoreinheit 4 in Abhängigkeit von dessen Spannungspegel geschaltet. Dementsprechend ändert sich beim Zuschalten des zweiten Parallelwiderstandes 543a durch den Schalter 543c das Teilerverhältnis und somit das Potential am zweiten Eingang des Verstärkers 541. Folglich ändert sich auch die über den Transistor 540 eingestellte Stromstärke des Sensorsignals si.

Aufgrund dieser Ansteuerung des Transistors 540 ergibt sich durch den entsprechend verschalteten Verstärker 541 eine Regelung der Stromstärke des Sensorsignals sₗ gemäß einem PI-Regelungskreis. Erfindungsgemäß wäre dementsprechend auch jegliche andere Eingangs-Verschaltung des Verstärkers 541 einsetzbar, die ebenfalls eine I, PI- oder PID Regelung der Stromstärke des Sensorsignals s_{I} bewirkt.

Im Gegensatz zu der in Fig. 2 gezeigten Ausführungsvariante ist der Widerstand 55' in Fig. 3 regelbar ausgelegt. Eine Regelung könnte wiederum auf Basis der Stromstärke des Sensorsignals s_{I} erfolgen (beispielsweise durch die übergeordnete Einheit 6 oder die Sensoreinheit 4). Die Regelung könnte insbesondere so erfolgen, dass der Spannungsabfall an der Sensoreinheit 4 bei den entsprechenden Stromstärken in den vom NAMUR-Protokoll vorgegebenen Bereichen liegt (eine alternative Regelung könnte auch eine Stromunabhängige, konstante Spannungsregelung des Signaleingangs 51 vorsehen).

Bei der in Fig. 3 gezeigten Ausführungsvariante ist parallel zum Widerstand 55' zusätzlich ein Speicherkondensator 56 angeordnet. Mittels ihm kann unter anderem die Energieversorgung zur Sensoreinheit 4 überbrückt werden, wenn die Spannungsversorgung der übergeordneten Einheit 6 temporär einbricht. Darüber hinaus ermöglicht ein (hochohmiger) Überbrückungswiderstand 57 das Hochfahren des Feldgerätes 1. Dieser ist parallel zum Transistor (540) angeordnet. Der Überbrückungswiderstand 57 ist erforderlich, da die Sensoreinheit 4 im ausgeschalteten Zustand kein Steuersignal sv ausgibt. Dementsprechend schließt der Transistor 540 währenddessen komplett und lässt keine Energieversorgung zur Sensoreinheit 4 zu.

Wenn zum Hochfahren des Feldgerätes 1 nach vorheriger Unterbrechung durch die übergeordnete Einheit 6 wieder eine Spannungsversorgung am Signaleingang 51 anliegt, wird hierdurch der Kondensator 56 über den Überbrückungswiderstand 57 aufgeladen. Dementsprechend wird die Sensoreinheit 4 ab einer gewissen Mindestspannung wieder mit Energie versorgt.

### Bezugszeichenliste

- 1: Feldgerät
- 2: Behälter
- 3: Füllgut
- 4: Sensoreinheit
- 5: Schnittstelle
- 6: Übergeordnete Einheit
- 51: Signaleingang
- 52: Erste Signalleitung
- 53: Zweite Signalleitung
- 54: Stromquelle
- 55: Zener-Diode
- 55': Regelbarer Widerstand
- 56: Speicherkondensator
- 57: Überbrückungswiderstand
- 540: Transistor
- 541: Verstärker
- 542: Referenzspannungsquelle
- 543 a,b: Spannungsteiler
- 543c: Schaltelement
- 544: Regelwiderstand
- Rshunt: Impedanz
- s_{I}: Sensorsignal
- s_{V}: Steuersignal

## Patentansprüche

1. Feldgerät zur Bestimmung eines Grenzwertes einer physikalischen oder chemischen Prozessgröße, mit einer Sensoreinheit (4), die zur Detektion des Grenzwertes geeignet ist, und mit einer Schnittstelle (5),
wobei die Sensoreinheit (4) über die Schnittstelle (5) mit einer übergeordneten Einheit (6) verbindbar ist, um ein strombasiertes Sensorsignal (s_{I}) an die übergeordnete Einheit (6) zu übertragen, und
wobei die Schnittstelle (5) zumindest folgende Komponenten umfasst:
- Einen Signaleingang (51) mit einem ersten Signalpfad (52) und einem zweiten Signalpfad (53),
- eine steuerbare Stromquelle (54), die im ersten Signalpfad (52) oder im zweiten Signalpfad (53) angeordnet ist,
- zumindest ein Widerstandselement (55, 55'), das in Bezug zum Signaleingang (51) hinter der Stromquelle (54) parallel zur Sensoreinheit (4) angeordnet ist, wobei die steuerbare Stromquelle (54) ausgestaltet ist, um das Sensorsignal (s_{I}) am Signaleingang (51) in Abhängigkeit eines von der Sensoreinheit (4) ausgegebenen Steuersignals (s_{V}) zu steuern,
wobei die Sensoreinheit (4) ausgestaltet ist, um das Steuersignal (s_{V}) als digitalen Wert, welcher das Erreichen des Grenzwertes repräsentiert, separat auszugeben,
wobei die Schnittstelle (5) ausgelegt ist, um das Sensorsignal (s_{I}) derart zu übertragen, dass eine Stromstärke des Sensorsignals (s_{I}) im Bereich von ca. 0,4 mA bis 1 mA einen nicht erreichten Grenzwert repräsentiert, und dass eine Stromstärke des Sensorsignals (s_{I}) im Bereich von ca. 2,2 mA bis 9,5 mA einen erreichten Grenzwert repräsentiert.

2. Feldgerät nach Anspruch 1, wobei es sich bei dem Grenzwert um einen Grenzstand eines in einem Behälter (2) befindlichen Füllgutes (3) handelt, und wobei die Sensoreinheit (4) einen nach dem vibronischen Messprinzip arbeitenden Sensor umfasst.

3. Feldgerät nach Anspruch 1 oder 2, wobei das Widerstandselement (55, 55') als regelbarer Widerstand (55') ausgestaltet ist.

4. Feldgerät nach Anspruch 3, wobei der Widerstand (55') in Abhängigkeit der an der Sensoreinheit (4) anliegenden Spannung geregelt ist.

5. Feldgerät nach Anspruch 1 oder 2, wobei das Widerstandselement (55, 55') als Zener-Diode (55) ausgestaltet ist, die in Sperrrichtung angeordnet ist.

6. Feldgerät nach einem der Ansprüche 1 bis 5, wobei die steuerbare Stromquelle (54) zumindest folgende Komponenten umfasst:
- Einen Transistor (540), dessen Kollektor- bzw. Source-Anschluss und dessen Emitter- bzw. Drain-Anschluss entweder im ersten Signalpfad (52) oder im zweiten Signalpfad (53) angeordnet sind, und
- einen Verstärker (541), dessen Ausgang den Gate- bzw. Basis-Anschluss des Transistors (540) ansteuert, wobei die zumindest zwei Eingänge des Verstärkers (541) derart verschaltet sind, dass die Stromquelle (54) den Wert des Sensorsignals (s_{I}) gemäß einer Regelungsfunktion, insbesondere einer I, PI- oder PID-Regelungsfunktion, regelt.

7. Feldgerät nach Anspruch 6, wobei die zumindest zwei Eingänge des Verstärkers (541) zur Regelung des Stromsignals (s_{I}) gemäß der Regelungsfunktion wie folgt verschaltet sind:
- ein erster Eingang des Verstärkers (541) ist an den zweiten Signalpfad (53) angeschlossen, wobei dieser Anschluss ein Massepotential der Schnittstelle (5) bildet,
- ein zweiter Eingang des Verstärkers (541) ist derart über einen ersten Teilwiderstand (543a) eines Spannungsteilers (543a, 543b) an eine Referenzspannungsquelle (542) angeschlossen, dass sich das Potential am zweiten Eingang des Verstärkers (541) aus dem Teilerverhältnis des Spannungsteilers (543a, b, c) in Bezug zu der Referenzspannungsquelle (542) ergibt,
wobei der zweite Teilwiderstand (543a) des Spannungsteilers (543a,b,c) mit dem zweiten Signalpfad (53) verbunden ist, und
- im zweiten Signalpfad (53) ist zwischen dem Massepotential und dem zweiten Teilwiderstand (543b) ein Regelwiderstand (544) angeordnet.

8. Feldgerät nach Anspruch 7, wobei der Spannungsteiler (543a, b, c) derart ausgestaltet ist, dass das Teilerverhältnis des Spannungsteilers mittels eines Schaltelements (543c) zwischen zumindest zwei verschiedenen Werten umschaltbar ist, und wobei das Schaltelement (543c) durch das Steuersignal (s_{V}) der Sensoreinheit (4) gesteuert wird.

9. Feldgerät nach Anspruch 7, wobei der Spannungsteiler (543a, b, c) als Potentiometer ausgestaltet ist, welches durch das Steuersignal (s_{V}) der Sensoreinheit (4) auf zumindest zwei unterschiedliche Teilerverhältnisse einstellbar ist.

## Claims

1. Field device designed to determine a limit value of a physical or chemical process variable, with a sensor unit (4) that is suitable for detecting the limit value, and with an interface (5),
wherein the sensor unit (4) can be connected to a higher-level unit (6) via the interface (5) in order to transmit a current-based sensor signal (s_{I}) to the higher-level unit (6), and
wherein the interface (5) comprises at least the following components:
- a signal input (51) with a first signal path (52) and a second signal path (53),
- a controllable current source (54) which is arranged in first signal path (52) or in the second signal path (53),
- at least a resistor element (55, 55') which is arranged in relation to the signal input (51) behind the current source (54) and parallel to the sensor unit (4),
wherein the controllable current source (54) is designed to control the sensor signal (s_{I}) at the signal input (51) depending on a control signal (s_{V}) output by the sensor unit (4),
wherein the sensor unit (4) is designed to separately output the control signal (s_{V}) as a digital value representing the fact that the limit value is reached, wherein the interface (5) is designed to transmit the sensor signal (s_{I}) in such a way that a current intensity of the sensor signal (s_{I}) in the range from approximately 0.4 mA to 1 mA represents a limit value that is not reached, and that a current intensity of the sensor signal (s_{I}) in the range from approximately 2.2 mA to 9.5 mA represents a limit value that is reached.

2. Field device as claimed in Claim 1, wherein the limit value is a limit level of a medium (3) located in a vessel (2), and wherein the sensor unit (4) comprises a sensor that operates according to the vibronic measuring principle.

3. Field device as claimed in Claim 1 or 2, wherein the resistor element (55, 55') is designed as a controllable resistor (55').

4. Field device as claimed in Claim 3, wherein the resistance (55') is controlled depending on the voltage applied to the sensor unit (4).

5. Field device as claimed in Claim 1 or 2, wherein the resistor element (55, 55') is designed as a Zener diode (55), wherein said diode is arranged in the blocking direction.

6. Field device as claimed in one of the Claims 1 to 5, wherein the controllable current source (54) comprises at least the following components:
- a transistor (540) whose collector or source connection and whose emitter or drain connection are arranged either in the first signal path (52) or in the second signal path (53), and
- an amplifier (541) whose output controls the gate or basis connection of the transistor (540), wherein the at least two inputs of the amplifier (541) are connected in such a way that the current source (54) regulates the value of the sensor signal (s_{I}) according to a control function, particularly an I, PI or PID control function.

7. Field device as claimed in Claim 6, wherein the at least two inputs of the amplifier (541) designed to regulate the current signal (s_{I}) according to the control function are connected as follows:
- a first input of the amplifier (541) is connected to the second signal path (53), wherein this connection forms a ground potential of the interface (5),
- a second input of the amplifier (541) is connected to a reference voltage source (542) via a first partial resistor (543a) of a voltage divider (543a, 543b) in such a way that the potential at the second input of the amplifier (541) is the result of the division ratio of the voltage divider (543a, b, c) in relation to the reference voltage source (542),
wherein the second partial resistor (543a) of the voltage divider (543a, b, c) is connected to the second signal path (53), and
- a variable resistor (544) is arranged in the second signal path (53) between the ground potential and the second partial resistor (543b).

8. Field device as claimed in Claim 7, wherein the voltage divider (543a, b, c) is designed in such a way that the division ratio of the voltage divider can be switched between at least two different values by means of a switching element (543c), and wherein the switching element (543c) is controlled by the control signal (s_{V}) of the sensor unit (4).

9. Field device as claimed in Claim 7, wherein the voltage divider (543a, b, c) is designed as a potentiometer, which can be set to at least two different division ratios by the control signal (s_{V}) of the sensor unit (4).

## Revendications

1. Appareil de terrain destiné à la détermination d'un seuil d'une grandeur de process physique ou chimique, avec une unité de capteur (4), laquelle unité est appropriée pour la détection du seuil, et avec une interface (5),
l'unité de capteur (4) pouvant être reliée par l'intermédiaire de l'interface (5) à une unité supérieure (6) pour transmettre un signal de capteur (s_{I}) basé sur le courant à l'unité supérieure (6), et
l'interface (5) comprenant au moins les composants suivants :
- une entrée de signal (51) avec un premier trajet de signal (52) et un deuxième trajet de signal (53),
- une source de courant contrôlable (54) disposée dans le premier trajet de signal (52) ou dans le deuxième trajet de signal (53),
- au moins un élément résistif (55, 55') qui est disposé par rapport à l'entrée de signal (51) derrière la source de courant (54) en parallèle avec l'unité de capteur (4),
la source de courant contrôlable (54) étant conçue pour commander le signal de capteur (s_{I}) à l'entrée de signal (51) en fonction d'un signal de commande (s_{V}) émis par l'unité de capteur (4),
l'unité de capteur (4) étant conçue pour émettre séparément le signal de commande (s_{V}) sous la forme d'une valeur numérique représentant le fait que le seuil est atteint,
l'interface (5) étant conçue pour transmettre le signal de capteur (si) de telle sorte qu'une intensité de courant du signal de capteur (s_{I}) dans la gamme d'environ 0,4 mA à 1 mA représente un seuil non atteint, et qu'une intensité de courant du signal de capteur (s_{I}) dans la gamme d'environ 2,2 mA à 9,5 mA représente un seuil atteint.

2. Appareil de terrain selon la revendication 1, pour lequel le seuil est un seuil de niveau d'un produit (3) se trouvant dans un récipient (2), et pour lequel l'unité de capteur (4) comprend un capteur fonctionnant selon le principe de mesure vibronique.

3. Appareil de terrain selon la revendication 1 ou 2, pour lequel l'élément résistif (55, 55') est conçu comme une résistance réglable (55').

4. Appareil de terrain selon la revendication 3, pour lequel la résistance (55') est régulée en fonction de la tension appliquée à l'unité de capteur (4).

5. Appareil de terrain selon la revendication 1 ou 2, pour lequel l'élément résistif (55, 55') est conçu comme une diode Zener (55), laquelle diode est disposée dans la direction de blocage.

6. Appareil de terrain selon l'une des revendications 1 à 5, pour lequel la source de courant contrôlable (54) comprend au moins les composants suivants :
- un transistor (540) dont le collecteur ou la source et l'émetteur ou le drain sont disposés soit dans le premier trajet de signal (52), soit dans le deuxième trajet de signal (53), et
- un amplificateur (541) dont la sortie commande la grille ou la base du transistor (540), les au moins deux entrées de l'amplificateur (541) étant connectées de telle sorte que la source de courant (54) régule la valeur du signal de capteur (s_{I}) conformément à une fonction de régulation, notamment une fonction de régulation I, PI ou PID.

7. Appareil de terrain selon la revendication 6, pour lequel les au moins deux entrées de l'amplificateur (541) destinées à la régulation du signal de courant (s_{I}) selon la fonction de régulation sont connectées comme suit :
- une première entrée de l'amplificateur (541) est connectée au deuxième trajet de signal (53), cette connexion formant un potentiel de masse de l'interface (5),
- une deuxième entrée de l'amplificateur (541) est connectée à une source de tension de référence (542) par l'intermédiaire d'une première résistance partielle (543a) d'un diviseur de tension (543a, 543b), de telle sorte que le potentiel à la deuxième entrée de l'amplificateur (541) résulte du rapport de division du diviseur de tension (543a, b, c) par rapport à la source de tension de référence (542), la deuxième résistance partielle (543a) du diviseur de tension (543a, b, c) étant reliée au deuxième trajet de signal (53), et
- une résistance de régulation (544) est disposée dans le deuxième trajet de signal (53) entre le potentiel de masse et la deuxième résistance partielle (543b).

8. Appareil de terrain selon la revendication 7, pour lequel le diviseur de tension (543a, b, c) est conçu de telle sorte que le rapport de division du diviseur de tension peut être commuté entre au moins deux valeurs différentes au moyen d'un élément de commutation (543c), et pour lequel l'élément de commutation (543c) est commandé par le signal de commande (s_{V}) de l'unité de capteur (4).

9. Appareil de terrain selon la revendication 7, pour lequel le diviseur de tension (543a, b, c) est conçu comme un potentiomètre, lequel potentiomètre peut être réglé sur au moins deux rapports de division différents par le signal de commande (s_{V}) de l'unité de capteur (4).
